(19)

Europäisches
Patentamt
European
Patent Office
Office européen
des brevets

(11) **EP 1 950 550 A1**

(12) **EUROPEAN PATENT APPLICATION**

(43) Date of publication:
**30.07.2008 Bulletin 2008/31**

(51) Int Cl.:
*G01N 11/06* (2006.01)   *G01N 13/02* (2006.01)

(21) Application number: **07001575.5**

(22) Date of filing: **25.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **FLAMAC**
**9052 Zwijnaarde (BE)**

(72) Inventors:
• **Desie, Guido**
**3020 Veltem Beisem (BE)**

• **Van Geel, Erik**
**2540 Hove (BE)**
• **Van Gemert, Danny**
**2235 Hulshout (BE)**
• **Van den Bossche, Karl**
**2620 Hemiksem (BE)**
• **Dieltjens, Gunter**
**2280 Grobbendonk (BE)**

(74) Representative: **Bird, William Edward et al**
**Bird Goën & Co.**
**Klein Dalenstraat 42A**
**3020 Winksele (BE)**

(54) **Method and apparatus for measuring viscosity and surface tension**

(57)    Methods and apparatus for measuring viscosity and/or surface tension of a liquid are described in which droplets are formed at a needle or pipette containing a sample of the test liquid and a size-related characteristic of the droplets such as droplet size, volume, diameter, or weight of the test liquid are measured.

Subsequently or previously, a volume of the same sample of the test liquid is drained from the needle or pipette under pump pressure or a hydrostatic pressure, and an elution time is measured.

The method and apparatus allows or includes determining the viscosity from the elution time, and determining the surface tension from the viscosity and the size-related characteristic of the droplet such as droplet size, volume, diameter, or weight of the test liquid.

FIG 5

EP 1 950 550 A1

## Description

This invention relates to the technical field of methods of measuring at least one rheological property of liquids such as viscosity and/or surface tension, methods of selecting certain liquids such as printing inks based on such methods and apparatus for making such measurements.

## TECHNICAL BACKGROUND

Viscosity is a measure of the resistance of a fluid to deformation under shear stress. When a force is applied to a volume of material then a displacement (deformation) occurs. If two plates (area, A), separated by fluid distance (separation height, H) apart, are moved (at velocity V by a force F) relative to each other, Newton's law states that the shear stress (the force divided by area parallel to the force, F/A) is proportional to the shear strain rate (V/H). The proportionality constant is known as the (dynamic) viscosity (h).

Viscosity can depend on the shear rate, the temperature, the pressure, the time (history of shear), and the physical and chemical properties of the fluid. Increasing the concentration of a dissolved or dispersed substance generally gives rise to increasing viscosity (i.e. thickening), as does increasing the molecular weight of a solute. With Newtonian fluids (typically water and solutions containing only low molecular weight material), the viscosity is independent of shear strain rate.

Viscosity and surface tension are two of the most important physical characteristics of inks. In inkjet technology, the viscosity of ink is one of the factors that determine the jettability, the surface tension governs the size of the drop formed, and accordingly the definition and the precision of the picture printed are dependent on these two parameters. For these reasons and others, it can be important to know the viscosity and the surface tension to explain the properties of the inks.

There exist several ways for measuring viscosity, with different ranges of precision and different measurement times. With recent requests to have shorter time-to-market results, high throughput methods are becoming more popular requiring larger numbers of samples and needs for faster measurement methods. In some cases a perfect accuracy of the measurement is not essential. Ink manufacturers may have a lot of samples of ink to test or screen. They are put in an oven at high temperatures, in order to observe their stability. It is a shelf life test. In that case the initial viscosity is compared to the final viscosity after the heating. Here, getting an accurate measure of viscosity is not necessary, because only a comparison is made. In this example, because of the high number of samples a fast method is needed. Viscosity and surface tension screening is typically reliant only on this combination of monitoring shelf life and stability.

It is known from US 685730 to provide automated apparatus and methods for high throughput rapid serial screens for evaluating properties such as surface tension, interfacial tension and the like of libraries of polymers or other materials. The system includes one or more capillary tubes for dispensing a fluid material in drops or otherwise through a fluid medium (e.g., air or another fluid) past a photodetector. Preferably, the capillary tube is attached to a robot or other automated system (not shown) so that the tube may automatically retrieve portions of sample materials to be dispensed in drops. A time interval between drops passing the photodetector may be monitored according to any computerized or other system receiving signals from the photodetector. Moreover, the volumetric flow rate (Q) of the sample material leaving the capillary tube may be monitored by measuring the total volume of sample material leaving the tube divided by the total time that the sample material is leaving the tube.

Alternatively, the volumetric flow rate (Q) may be monitored by using a capillary tube and system that dispenses a predetermined volume of sample material and dividing that predetermined volume by the total time of dispensing the volume. Other methods of monitoring flow rate or even drop volume may also be utilized.

The document shows another alternative apparatus having a dispenser which dispenses one or more drops of each material sample of the library upon the surface of the substrate. Shortly thereafter, the surface tension or cohesive forces of the drops come to equilibrium. For monitoring the response of the drops, transducers are provided in the form of optical sensors for sensing the shape of the drops and particularly the shape of the outer surfaces of the drops. After monitoring the response of the drops, the contact angle is determined from the shape of the drops. From this, the surface tension of the drops can be determined according to a variety of known techniques.

This document also has definitions which are adopted for the present invention as follows:

Viscosity: A measure of a resistance of a fluid to flow when subjected to a force, and preferably one for inducing a shear stress. Reference herein to viscosity is not intended to exclude the employment of viscosity measurements to the determination of other rheological properties recognized as interdependent upon the measurement of viscosity, including but not limited to, density, temperature dependent properties of materials such as melt flow index, or the like.

Surface Tension: A measure of the force (e.g., intermolecular forces) acting on the surface of a liquid tending to minimize the surface area of the liquid. Surface tension may be quantified in terms of the force acting over the surface per unit area of the surface perpendicular to the surface or in terms of free energy per unit interfacial area.

Interfacial Tension: A measure of the force (e.g. intermolecular forces) acting on the surface of a liquid tending to minimize the surface area of the liquid while in another liquid. Interfacial tension may be quantified as the force acting over the surface per unit length of the surface. As noted herein, the definition of surface tension includes interfacial tension, however, the reverse in not always true (i.e., interfacial tension refers to the tension at the interface between two liquids whereas, surface tension applies to tension at the interface of a liquid in and any other medium such as a fluid, gas, liquid or solid).

Determination of viscosity characteristics of fluids is also a method that needs to be speeded up more in order to cope with the ever growing demand for faster responses. Traditionally, a very simple method consists of using capillaries with different diameters. A known quantity of liquid is aspirated and then the elution time is recorded and related to a dynamic viscosity value. This is a rather slow process needing large volume samples and different pipettes in function of the measured viscosity range. For that reason it is not easy to be automated.

High throughput variations of viscosity screening tools have been described. Some of these techniques are based on High Throughput (HT) rheometer concepts, such as US 6,681,618; US 6,668,622; US 6,655,194; US 6,644,101, or US 6,484,567. Other methods are based on HT resonator concepts, such as e.g. US 6,957,565; US 6,904,786; US 6,401,519; US 6,393,895; US 6,336,353, or US 6,182,499. Still other methods have been described based upon horizontally capillaries (US 6,941,797), pressing liquids in capillaries (US 6,769,292), or HTS with robot and pressure difference in capillaries (US 6,732,574; US 6,393,898).

Most of these mentioned methods are rather complicated and not easy to implement in a reproducible daily workflow.

Another known system is used in a combinatorial workflow where liquid handling technology is commonly available. Liquid is drained through a needle and then the elution time is recorded as function of time. From this time measurement a kinematic viscosity value can be derived. The major drawback of this method, however, is that if the viscosity of the test liquid is rather high, the liquid leaves the needle only very slowly or not at all, making it difficult to record viscosity values varying over a wide range. For combinatorial experimentation, however, this is often the case. In a first screening phase, typically a multi-dimensional space is covered, leading to combinations with very low and others with very high viscosity values. Therefore there is still a strong demand for a method that can be used for high speed viscosity determination in an automated way over a wide viscosity range.

## SUMMARY OF THE INVENTION:

An object of the invention is to provide improved apparatus or methods for measuring rheological properties of a fluid such as a test liquid, e.g. for measuring dynamic viscosity and/or surface tension. According to a first aspect, the invention provides:

A method of measuring viscosity and surface tension of a liquid, the method comprising:

forming droplets at a needle or pipette containing a sample of the test liquid and measuring a size-related characteristic of the droplets such as droplet size, volume, diameter, or weight of the test liquid, and
subsequently or previously, draining a volume of the same sample of the test liquid from the needle or pipette under pump pressure or a hydrostatic pressure, and measuring an elution time. The needle or pipette is hollow having a bore and an inner diameter.

The method allows or includes determining the viscosity from the elution time, and determining the surface tension from the viscosity and the size-related characteristic of the droplet such as droplet size, volume, diameter, or weight of the test liquid. A better trade off of accuracy and speed of measurement can be made by this method. In particular, the measurement of surface tension being dependent on the viscosity, measurement of both surface tension and viscosity can increase accuracy without adding undue delay. Using the same needle or pipette (i.e. having the same inner diameter) and taking liquid from the same sample of test liquid for both measurements can help reduce or avoid systematic errors or contamination errors, and can improve speed of measurement.

In this aspect of the present invention a combined methodology to determine surface tension and viscosity is provided that includes two separate process steps. To determine the surface tension it is only required to pump or drain a small amount of test liquid such as ink through a needle and determine a size-related characteristic of the droplets that have been forming on the tip of the needle. Optionally, the forming of the droplets includes draining of the droplets at a predetermined rate.

To determine the viscosity a draining time is measured for a certain amount of liquid being drained from the needle. The volume of test liquid eluted may be a predetermined volume and/or may be an in situ measured volume. To provide the hydrostratic pressure a driving liquid or gas can be used. A gas or air gap may be used to separate the driving fluid from the test liquid.

The pump pressure or hydrostatic pressure is preferably provided so that the pressure remains sensibly constant during the elution. If a pump is used, the pump pressure is preferably low. The hydrostatic pressure is preferably exerted on the test liquid by a driving fluid such as a driving liquid or driving gas. This can be done by placing the equipment in open drain condition with a rather constant liquid level. Accordingly, the elution profile of the test liquid, e.g. ink outside of the needle, is in such an embodiment a combination of the hydrostatic pressure (e.g. due to gravity) of the test liquid sample plus that of the driving liquid.

Preferably, the driving fluid has a lower viscosity than the test liquid to be measured. The advantage of this feature is that the viscosity and hence pressure drop caused by the driving fluid can be made low or negligible so that the same needle or pipette may be used for a wide variety of test samples with different viscosities.

In some prior art elution techniques the elution speed typically starts at a high level, and then diminishes until a very slow level (or even to a situation where no further elution takes place). This is easily understandable since the hydrostatic pressure during the draining regime is constantly being reduced due to the liquid level that is constantly decreasing. With the help of a driving liquid, preferably having a large volume, e.g. in a reservoir at least one of the problems with the prior art methods can be solved. If the height of driving liquid column can be kept sensibly constant, e.g. by using a sufficiently large reservoir of driving liquid, then also the pressure evolution during the full measurement is kept constant. This means that during the period where the test liquid is passing through the needle a rather constant elution speed is being recorded mainly related to the viscosity of the test liquid and other device parameters such as needle characteristics and pressure characteristics. After the test liquid has been fully eluted, either the optional air gap or the driving fluid is leaving the needle. In the case of the air gap it is easy to detect this timing since the change in flow with the air passing through the needle is very large. When the driving liquid is leaving the needle, the difference with either the air of the air gap or the test liquid is large, so it is easily determinable.

Since the test liquid is being eluting out of the needle, the elution speed is preferably kept constant and is preferably only dependent upon the characteristics of the driving liquid and characteristics of the measuring device. As such it can be used as an internal calibration procedure so that any deviation - due to e.g. a faulty sample that was aspirated - is immediately observed and no wrong measurements can be identified.

Compared with prior art descriptions the methods to determine viscosity of test liquids such as inks according to the present invention has many benefits: small sample volumes are possible, fast measuring times are possible, automation is easily done, screening of fluids with very largely varying viscosities can be done, auto-cleaning after aspirating bad inks is easily done.

The ability to use the same needle or pipette for a wide variety of test samples with different viscosities means that the present invention also provides:

A method of measuring viscosity and surface tension of a plurality of test liquids having different viscosities and/or surface tensions, the method comprising:

forming first droplets at a needle or pipette containing a sample of a first test liquid and
measuring a size-related characteristic of the first droplets such as droplet size, volume, diameter, or weight of the first test liquid, and
subsequently or previously, draining a volume of the same sample of the first test liquid from the needle or pipette under a pump pressure or hydrostatic pressure, and measuring an elution time, and
forming second droplets at the same needle or pipette containing a sample of a second test liquid, at a rate and measuring a size-related characteristic of the second droplets such as droplet size, volume, diameter, or weight of the second test liquid, and
subsequently or previously, draining a volume of the same sample of the second test liquid from the needle or pipette under a hydrostatic pressure, and measuring an elution time.

The pump pressure or hydrostatic pressure is preferably provided so that the pressure remains sensibly constant during the elution. With both test liquids the same driving fluid may be used to exert the hydrostatic pressure.

The present invention also provides:

A method of measuring viscosity of a liquid, the method comprising:

draining a volume of a sample of the test liquid from a needle or pipette under pump pressure or a hydrostatic pressure, and measuring an elution time, the hydrostatic pressure being exerted on the test liquid by a driving fluid.

The volume of test liquid eluted can be a predetermined volume and/or an in situ measured volume.

The pump pressure or hydrostatic pressure preferably remains sensibly constant during the elution.

The driving fluid can be either a driving liquid or driving gas. Preferably the driving fluid has a lower viscosity than the viscosity of the test liquid.

Advantageously, when the driving fluid is a liquid, this liquid is separated from the test liquid via a gas or air gap.

Where the pressure is provided by a column height of the driving liquid, the column height of the driving liquid is preferably kept constant dynamically, i.e. during the elution of the test liquid.

Any additional features can be added, and some such additional features are claimed in dependent claims and some are described in the embodiments illustrated.

The present invention also includes apparatus for measuring viscosity and surface tension of a fluid, comprising:

means for forming droplets at a needle or pipette containing a sample of a test liquid and measuring a size-related characteristic of the droplets such as droplet size, volume, diameter, or weight of the test liquid,
means for, subsequently or previously, draining a volume of the same sample of the test liquid from the needle or pipette under a hydrostatic pressure using a driving fluid, and means for measuring an elution time.

The volume of test liquid eluted may be a predetermined volume or the apparatus may have a means for in situ measuring of an eluted volume, e.g. eluted with a certain time.

The hydrostatic pressure is exerted on the test liquid by the driving fluid such as a driving liquid or driving gas. Preferably, the driving fluid has a lower viscosity than the test liquid to be measured. The advantage of this apparatus is that the viscosity and hence pressure drop caused by the driving fluid can be made low or negligible so that the same needle or pipette may be used for a wide variety of test samples with different viscosities.

The apparatus can also have or be adapted to include means for determining the viscosity from the elution time, and means for determining the surface tension from the viscosity and the size-related characteristic of the droplet such as droplet size, volume, diameter, or weight of the test liquid.

A syringe pump may be used to drain the test liquid through the needle or pipette.

The present invention also provides:

An apparatus for measuring viscosity of a fluid, comprising:

means for draining a volume of the same sample of the test liquid from the needle or pipette under a hydrostatic pressure using a driving fluid, and
means for measuring an elution time.

The driving fluid can be a driving liquid or driving gas and may include means for determining the viscosity from the elution time.

Other aspects of the invention include at least a controller for controlling such apparatus to carry out the methods according to the present invention automatically, e.g. with a robot to change automatically from one fluid sample to another, and software to control the controller to carry out the method. Other aspects of the invention include means to automate the cleaning in between 2 sample recordings, means to incorporate automatic calibration procedures, and eventually means to automatically clean the needle system after a calibration/verification recording has pinpointed a deviation from the ideal device characteristics.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

**BRIEF DESCRIPTION OF THE DRAWINGS:**

How the present invention may be put into effect will now be described by way of example with reference to the appended drawings, in which:

FIG. 1 shows an overview of the method of an embodiment of the invention,
FIG. 2 shows another overview of the method of an embodiment of the invention,
FIG 3 shows steps of another embodiment of the invention,
FIGS 4 and 5 show views of apparatus for carrying out embodiments of the invention, arranged for driving the fluid, and for relying on hydrostatic pressure, respectively,
FIG 6 shows a view of detector and processing apparatus for use in embodiments of the invention,
FIGS 7 and 8 shows graphs of viscosity and surface tension, and

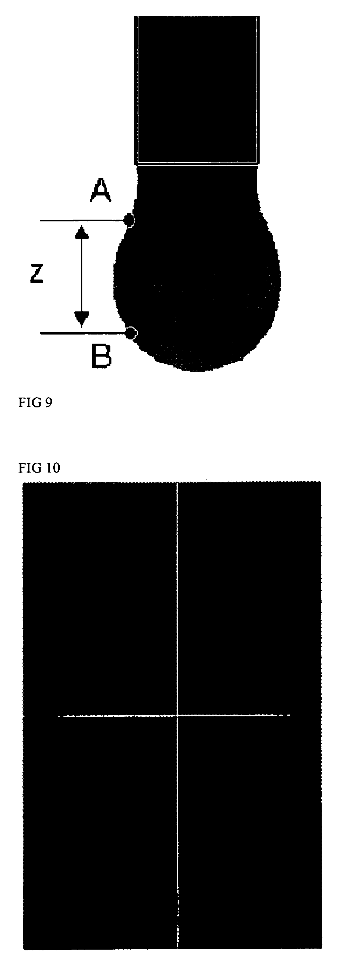

FIGS 9 and 10 show views of droplets for measuring.

**DESCRIPTION OF THE PREFERRED EMBODIMENTS:**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "liquid" should be understood broadly to include all forms of liquid material such as flowable pastes, suspensions, slurries, dispersions, emulsions, or solutions.

The embodiments described here will be described in relation to measuring various inks, but the present invention and its embodiments can be used for other fluids such as solvents, polymers, suspensions, paints, slurries, dispersions, emulsions, solutions, gases, etc.

The ink fluids that can be measured need not be Newtonian. For example, they could be near-Newtonian or substantially Newtonian meaning that the viscosity determined by methods of the present invention is shear-dependent but that the values obtained can be used for comparison with real-life situations at other shear speeds, e.g. by application of linear or non-linear models of the viscosity/shear speed relationship. The methods of the present invention can also be used for non-Newtonian liquids in which case only a single viscosity value is obtained corresponding with a single shear speed.

Without being limited by theory, according to the Laplace's law, the higher the surface tension of the flowing liquid is, the higher the radius of a drop or droplet. The radius or diameter of a droplet may be measured directly or may be derived from a droplet size related parameter such as volume or weight, e.g. by making use of the density as is know to the skilled person. The present invention can be used with a wide variety of liquid materials but the present invention will mainly be described with respect to inks. For example, inks that are suitable for use with the present invention are used for the inkjet printing technology. These inks can be used for thermal ink jet printing processes such as bubble jet techniques, for piezo printing processes such as those used in industrial printing techniques, and for continuous ink jet printing processes. Different ink types can be measured using this HT screening methodology, such as water based inks typically used in SOHO printers, solvent based inks typically used in billboard printers, UV-curable inks typically used in industrial printing presses, and oil-based inks typically used in some wide format printing devices.

Viscosity, i.e. dynamic viscosity, is an important characteristic of the inks. Measuring viscosity, with an analytical method which has a high accuracy (e.g. to within 1%), needs a lot of time per sample, and typically only 15 samples per day can be measured per operator. But in several applications, e.g. for ink manufacturers, a very accurate viscosity measuring method is not essential, only an idea of the viscosity is needed and a measurement within $\pm 10\%$ of accuracy is acceptable, e.g. in a first phase of the investigation (primary screening phase). In a second phase (lead optimization) a more accurate value can be achieved, e.g. to $\pm 4\%$ or less. An important consideration is quantity of sample, even if the measurement is less accurate, and throughput in terms of time per sample, in order to respond to the growing volume of requests for measurements. Generally, typical measurements can be made using the following methods:

Analytical viscosity measurements: viscosity is measured with a rheometer (e.g. AR2000-Rheometer) which applies a shear on the sample. It has a high accuracy ($\pm 1\%$), but it is not automated and only 10 to 15 samples can be measured each day per operator. With the trends towards combinatorial ink preparations, the number of samples has dramatically increased so this method is becoming insufficient. Furthermore, in most of the cases such a high accuracy is not needed.

There exist devices for automated viscosity measuring such as e.g. a Cambridge Applied Systems device: A magnetic piston is driven through the fluid, the travel time is a very accurate measure for the viscosity. This method is much faster than the analytical one (200 to 240 samples per day), whereas the accuracy remains quite good ($\pm 3\%$), but it still requires a great quantity of product (4 mL per sample). An other drawback of this device is that it is easily blocked if an unstable ink having extremely bad properties has been introduced into the instrument.

For UV curable inks and on the solvent based inks, another consideration is how difficult it is to clean the apparatus after use, especially for the high viscosity inks (especially UV inks). Moreover, an ink composition is a complex dispersion comprising many interacting ingredients. In order to have a better idea on influences of compositional variations, experiments have to be done, not only for "stable" ink compositions, but also for compositions at the edge of the "working window". The present invention and its embodiments provides methods and apparatus to check the viscosity properties of these inks for which a fast and robust screening methodology is needed.

It is preferred if the methods of the present invention for combined surface tension and viscosity measurement require less than 5 ml of test liquid, preferably less than 3 ml and more preferably 1 ml or less.

A first embodiment is in the form of a High Throughput Screening (HTS) methodology for measuring the viscosity and/or surface tension of liquids such as aqueous ink jet inks. It uses a commercially available robotic liquid handler such as e.g. a Gilson XL222, a SIAS Xanthus, a TECAN, or any other similar device. The method may make use of a controller that controls the operation of such devices, e.g. provides commands that control the operation. The method is based partly on observations that when a liquid such as ink flows under hydrostatic pressure (valve open, method A), the viscosity can be deduced from the elution time through a linear relationship. It is also based on observations that at a low pumping speed, surface tension can be deduced from the size of the droplets, though there is dependence also on the viscosity of the ink. It has been found that if the pumping is at a very low level (e.g. about 0.01 mL/min or lower as an example), the calibration curve is linear. Hence the liquid handling apparatus can be used for viscosity and surface tension screening of liquids, e.g. water based inks. In accordance with an aspect of the present invention these two properties can be obtained advantageously in two consecutive measurements, done on the same sample and using basically the same equipment.

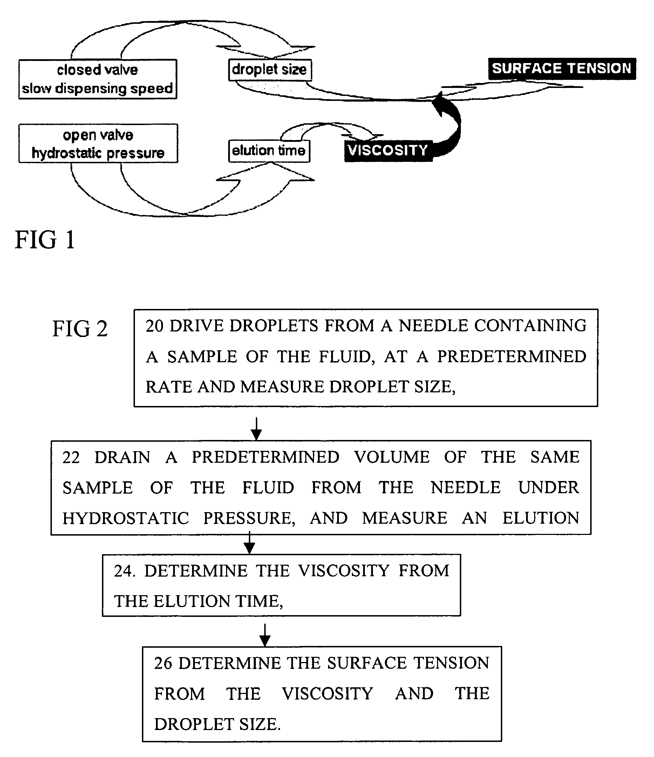

A suitable method is: the liquid, e.g. ink is aspirated into the needle or pipette, the needle or pipette being hollow and having an internal diameter, then a certain amount of liquid is dispensed preferably at a low imposed speed, to thereby form droplets at the end of the needle or pipette. A size related parameter of the droplets is then determined such as the size, diameter, volume, weight of a droplet or droplets. The first droplet that falls may be used in accordance with the present invention. However, it has been found that the first droplet formed may not be representative and hence the present invention includes that the second droplet or a later droplet is used for the determination or the second and other later droplets are measured and an average value calculated. For example, an average of a group of droplets may be calculated such as the average of the second to 5th, 8th, 10th, 11th or 12th droplet. Then the ink remaining is dispensed under hydrostatic pressure and an elution time is determined from which the viscosity can be deduced. This is shown schematically in fig 1.

Knowing the viscosity of the ink, it is then possible to determine its surface tension thanks to calibration curves linking this property to the droplet size, as shown schematically in fig 1.

It has been found that a methodology based on the evaluation of elution profile of the liquid, e.g. ink protruding out of a needle or pipette could be valuable for this purpose. An analysis of the elution profile provides information about viscosity and surface tension, even for aqueous inks, as there is a distinction between viscosity and surface tension effects.

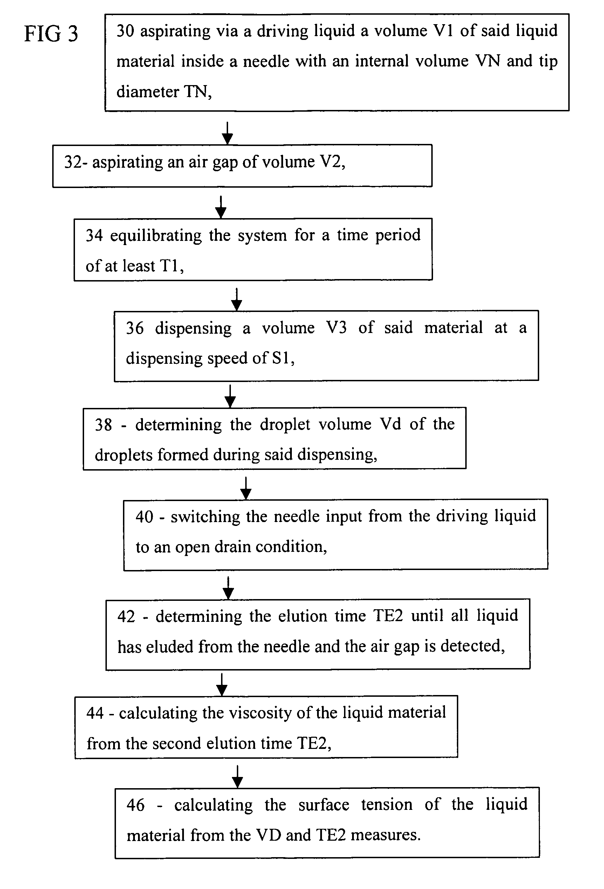

Some of the embodiments can provide methods for screening an array of materials for surface tension and viscosity, e.g. under the control of a controller, the method comprising the steps as shown in fig 3:

- aspirating (30), e.g. via a driving fluid such as a gas or liquid, a volume V1 of said liquid material inside a needle or pipette with an internal volume VN and tip diameter TN,
- optionally aspirating (32) a gas gap, e.g. an air gap of volume V2, e.g. when the driving fluid is a liquid,
- optionally equilibrating (34) the system for a time period of at least T1,
- dispensing (36) a volume V3 of said material at a dispensing speed of S1 (e.g. leading to an elution time TE1),
- determining (38) a droplet size related parameter such as the droplet volume Vd of the droplets, i.e. formed during said elution time TE1,
- switching (40) the needle or pipette input from the driving fluid to an open drain condition,
- determining (42) the elution time TE2 until all liquid has eluted from the needle or pipette, e.g. when the gas gap or air gap is detected,
- calculating (44) the viscosity of the liquid material from the second elution time TE2, and
- calculating (46) the surface tension of the liquid material from the VD and TE2 measures.

The open drain condition provides a hydrostatic pressure condition on the test sample, i.e. the test liquid will tend to drain because of its own weight and if there is a drive liquid above the test liquid, this will also exert a hydrostatic pressure.

When a gas gap is used the gas preferably does not dissolve in nor react with either of the driving fluid and the test liquid to any significant degree. The driving fluid preferably has a viscosity less than the viscosity of the test liquid, e.g. 3 times less, 5 times less or 10 times less or more. In this case, the elution times are determined by the test sample alone and the same needle can be used for a variety of different test liquids with varying viscosities.

Additional features can include that the total evaluation time per sample is less that 5 minutes, and/or that a total volume of sample material consumed per sample (V1) is less than 10 ml. For example the sample volume required for surface tansion and viscosity measurement may be 0.5 to 1ml for each test value giving a total of 1 to 2 ml or less than 3ml.

Some embodiments can alternatively provide a method for screening a plurality of liquid materials for at least one rheological property and another liquid related material property (examples can be viscosity and surface tension, respectively), e.g. under the control of a controller, the method comprising the steps of:

Aspirating, e.g. via a driving fluid such as a driving gas or driving liquid, a first volume (V1) of said liquid material (there can be various ranges of such a volume) inside a needle or pipette with an internal volume (VN) and tip diameter (TN) (again with various ranges of this value), optionally, e.g. if using a driving liquid, aspirating gas gap or an air gap of a second volume (V2) (again with various ranges of this value), optionally allowing the system to reach equilibrium for a time period of at least T1, dispensing a third volume (V3) of said liquid material at a dispensing speed (S1) (e.g. leading to a first elution time TE1) (again with various ranges of these values V3 and S1. [N.B, this is under the driving condition), determining a droplet size related parameter such as the droplet volume (VD) of droplets formed during said first elution time (TE1), switching the needle or pipette input from the driving fluid to an open drain condition, determining a second elution time (TE2) until all liquid material (or at least a given volume of it) has been eluted from the needle or pipette and e.g. when the air gap is detected, calculating the rheological property (such as viscosity) of the liquid material from the second elution time (TE2), and calculate the other property (e.g. surface tension) of the liquid material from the determined droplet volume (VD) and the second elution time (TE2).

One of the above mentioned additional features can be, for example, a measurement of from weight, e.g. by weighing one or more droplets on a weighing balance. Using the weight per droplet and the volume of the droplet a density can be determined.

In accordance with another embodiment of the present invention a method in accordance with the present invention can be carried out by: Forming droplets of a test liquid at a needle or pipette and measuring a droplet size related parameter such as droplet diameter of the test liquid,
measuring an elution time of the test liquid when placed under a hydrostatic pressure, e.g. by using a driving fluid,
calculating an estimate of the viscosity from the elution time, e.g. by using calibration curves or calibration look-up tables,
calculating a surface tension value of the test liquid from the droplet size related parameter and the estimated viscosity, and correcting the estimated viscosity using the surface tension value calculated to thereby obtain a final viscosity value.

A further step is to obtain a final value for the surface tension using the final viscosity value and the measured droplet size related parameter.

The present invention also includes another method of obtaining values for both the surface tension and the viscosity. In this method droplets of the test liquid are formed, e.g. the test liquid is injected from a syringe needle or pipette so that it forms a droplet on the tip of the needle or pipette. The drop is then optically observed and the surface tension is calculated from the shape of the drop via the LAPLACE equation.

The actual mathematics of the pendant drop analysis are based on the fact that pressure differences exist across curved surfaces.

At any point of the surface, the pressure difference is:

$$\Delta P = 2.\sigma.\left( \frac{1}{r_1} + \frac{1}{r_2} \right)$$

r1 and r2 are the principal radii of curvature

For a pendant drop the pressure difference within the drop between any two vertical positions on the drop is $Z\,g.\Delta\rho.$ . where $\Delta\rho$ is the difference in density between the liquid that is forming the drop and the bulk gas : $\Delta\rho = |\rho$ liquid-$\rho$ air|, $g$ the gravity, and $Z$ the vertical distance between the two positions.

Those points are then used in pairs, with the equations given above, to solve for surface tension:

$$\left(\left(\frac{1}{r_1}+\frac{1}{r_2}\right)_A -\left(\frac{1}{r_1}+\frac{1}{r_2}\right)_B\right).2.\sigma = \Delta\rho.g.Z$$

This static method has advantages in that it is able to use very small volumes of liquid, measure very low interfacial tensions and can measure molten materials easily.

Then to get the surface tension the formular is used:

$$\sigma = \frac{\Delta\rho.g.Z}{2}\cdot\frac{1}{\left[\left(\frac{1}{r_1}+\frac{1}{r_2}\right)_A -\left(\frac{1}{r_1}+\frac{1}{r_2}\right)_B\right]}$$

This method requires equipment to measure the diameter at two different positions. This may be done by equipment that can carry out an analysis in 3D.

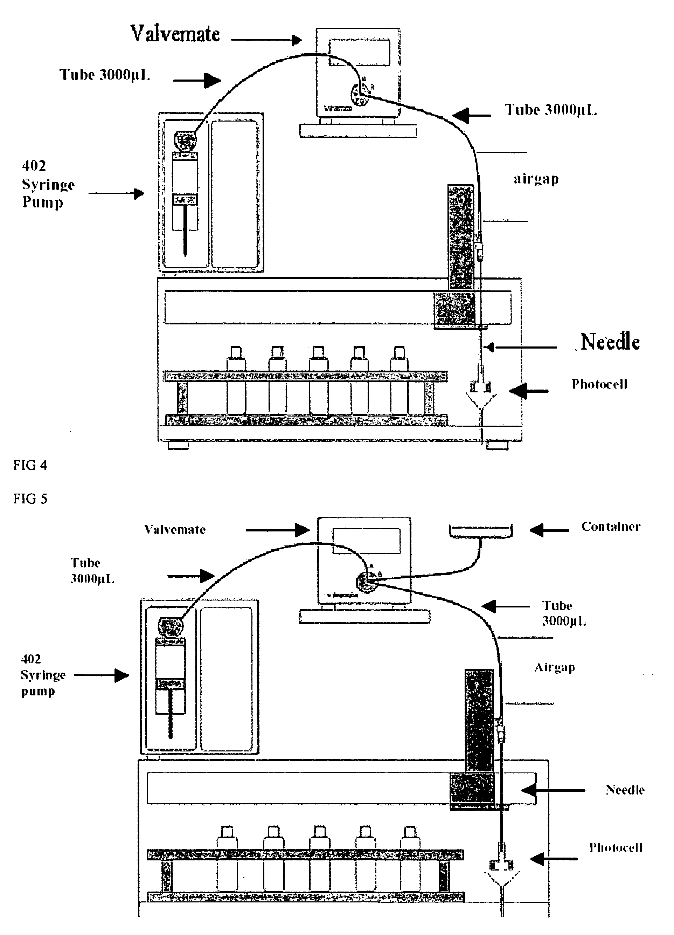

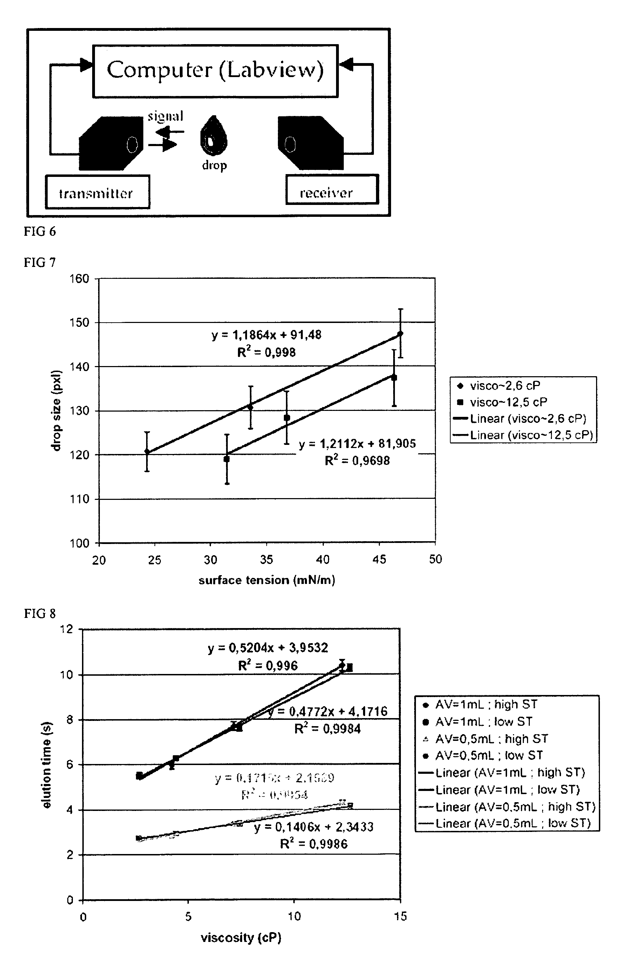

Figs 5,6 Apparatus:

A test device in the form of an automated liquid handler can be used in methods according to the present invention to determine viscosity and surface tension through elution profile evaluation, even for water-based inks as well as to screen a plurality of inks for suitable inks. The apparatus is composed of two parts: a liquid handling, sampling and dispensing device such as a Gilson XL222 or Anachem SK233 apparatus, or any other such apparatus that can aspirate and release the ink, and an imaging device. The devices may be under the control of a controller, e.g. to provide automatic operation. The apparatus is composed of e.g. a SK233 liquid handler equipped with a valvemate. The injector works with a 402 Syringe Pump that assures accuracy of injection volumes. Preferably, the liquid handler and the valvemate are automated and programmed by the user. The test liquid is aspirated with the pump and delivered by opening the valve to the atmospheric pressure or to connect to a driving gas or liquid, both of which "push" the test liquid out. The driving fluid preferably has a lower viscosity than the test liquid. For example for aqueous inks the driving liquid could be water or methyl ethyl ketone (MEK).

The imaging device can be camera or CCD array or photodetector array or similar that captures images of the droplets, e.g. as seen against a suitable background such as droplets falling behind a semi-opaque and lighted glass. Instead of using an imager any other method or apparatus can be used that determines a size related parameter of the droplets such as diameter, weight, volume, etc. For example, to measure the flowing time a photoelectric cell can be used, it locates every passing drop, and via data acquisition and an algorithm the draining time can be calculated. It is composed of a transmitter and a receiver, when the drop is passing the receiver the signal of the transmitter is not received and the drop is detected.

Two distinct computer programs can be used to control the liquid handler and the imaging device such as the camera. These computer programs may be included within a separate controller or each separate device may have its own controller. Firstly there is software to control the liquid handler such as the "735 Sampler" software that can control the Gilson XL222. The handler brings the needle or pipette to the sample of the test liquid, where the ink is aspirated, and then it is brought in front of an opaque background, e.g. glass. The drops fall just in front of the glass. All the tasks carried out by the apparatus are programmed, an example of a sequence of operations is as follows, for which software may be used when operating on a computing device having a memory and a processor :

- rinsing of the needle or pipette
   move to the sample
- aspiration of the test liquid, e.g. ink
- move
- aspiration of air (500 $\mu$L), i.e. for the air gap

move to the front of the glass

- dispensing of the ink (method A or B, or B then A).

Some parameters can be modified by the user :

- aspiration volume
- size of the air gap
- volume dispensed with the method B : if lower than the aspiration volume, the ink that remains is delivered by the method A
- dispensing speed.

All the operations of the apparatus can be automatic, e.g.

1) Aspiration of the sample to measure
2) Aspiration of the air gap
3) Keep valve to pumping position
4) Start of the droplet pumping measurement
5) Analysing drop patterns and calculation of droplet characteristics
6) Switching valve to atmospheric pressure or draining liquid
7) Start of the draining time measurement
8) Analysing drop patterns and calculation of draining time and time when drops fell
9) Exporting data to text-file
10) Switching valve to pumping position and
11) Rinsing the needle or pipette and tubing (e.g. with a cleaning liquid: water or MEK)

The algorithm can locate the end of the flow thanks to the air gap aspirated between the ink and the driving liquid. The algorithm compares the time between the consecutive signals (drops) with a value.
When the interval is higher than this value, it considers that the last drop is fallen and it saves the time.
Normally the time between the last drop and the driving liquid is higher than the value between two consecutive drops because there is an air gap (an air volume aspirated between the ink and the driving liquid). There are at least two ways to determinate the value and locate the end of the flow:

• The time air gap: the value of the interval of time can be set when the algorithm assumes the last drop has fallen. This time must be higher than a time between two drops; otherwise the algorithm stops before the end of the flow, or doesn't stop, OR
• The time period between the two first drops multiplied by a factor (for example 1.2).

In the air gap method the comparison time is chosen by the user, in the second method it is depending on the time between the two first drops.
A second algorithm measures and saves in a text folder the time when each drop fell. These data will allow calculation of the time between two consecutive drops.
The camera or other imaging device can also be controlled by software such as e.g. "PixeLINK Developers" software. It creates image data, for example video data. Image capture can be triggered manually or automatically. Some parameters can be adjusted by the user :

- region of interest : e.g. at least about 50 pixels such as 764x320 pixels with a number of grey levels such as 256 grey levels - exposure time : e.g. 2 microseconds to 10 milliseconds, e.g. 0.2 ms
- frame rate : e.g. 10 to 100 fps such as 100 fps
- number of frames depends on the size of the video data captured

The image data, e.g. video data can be analyzed by using any suitable size determining means, e.g. software and a computer, which enables the size of the droplet to be determined along a vertical line, whose length and position can be chosen by the user. An example is "Optivis" software. The contrast should be sufficient to distinguish between the droplet and the background, e.g. the glass. The fluid being measured can be colored and the lightness control can be set at or near its maximum. In the same way, the region of interest should preferably not be too far from the tip of the needle or pipette, otherwise the droplets will accelerate and fall too rapidly and are then not detected.
The software provides the elution profile, which can be in the form of a graph plotting a droplet size related parameter such as the droplet diameter (e.g. in number of pixels) versus the time (e.g. in seconds). These data can be saved as flat files such as text files, then re-opened with any suitable program such as a spread sheet program such as Excel supplied by Microsoft for example. Then several characteristics can be derived from the elution profile, such as :

- elution time : time from the beginning of the formation of the first droplet to the fall of the last droplet (located thanks to the air gap)
- number of droplets
- maximum diameter of the droplets
- droplet frequency : time between two consecutive maximums
- speed of formation of the drops

To use the liquid handler, such as the XL222 apparatus, for viscosity and surface tension screening of larger quantities of liquid materials, the software can be adapted so that all the steps can be automated, for example by the following :

- triggering of the imaging device such as the camera when the liquid, e.g. ink begins to flow out of the needle or pipette,
- analysis of the image data such as the video data with suitable software such as the Optivis software
- creation of an output file such as a text file.

Furthermore, the software to analyze the elution profile can obtain automatically and rapidly the information needed to calculate the properties of the ink (drop size and elution time), and:

- determine the size of a non-initial drop such as the second drop by finding the second maximum on the elution profile,
- detect a beginning and an end of the elution. These latter times can be located thanks to the provision of an air gap, e.g. when the time between two drops exceeds a value, e.g. becomes greater than the time difference between the two first drops multiplied by a factor.

Additional features of the hardware can include the following:

- a device for maintaining the hydrostatic pressure by controlling the height of driving liquid in a header container and refilling itself automatically, so the level - and consequently the hydrostatic pressure - remains constant,
- auto-cleaning between each measurement, of the opaque glass for background illumination, or a glass protecting the imaging device, e.g. the camera, since it is often dirtied by the ink splashing and bubbling at the end of the elution.

Thanks to the apparatus installation, many problems are solved: The drops are captured by an imaging device remote from them, so there is no splashing on a measuring cell. A video of the drops enables capture of more information about the droplets. The software is able to get the size of the drops, the different angles observed and enables to analyse their shape.

Figs 7,8 Analysis of measurements

It has been found that when the ink flows under hydrostatic pressure (e.g. valve open, method A), the viscosity can be deduced from the elution time through a relationship especially a linear relationship. This arises as the elution time is proportional to the viscosity, provided the total height of driving liquid in the system is constant. There is a dependency upon the surface tension, but it can be neglected for not too viscous inks, e.g. not exceeding 50 mPas. A liquid handling device such as the XL222 apparatus can thus be used for viscosity screening of water-based inks.

Fig. 7 shows graphs of elution times for different viscosities and different surface tensions. Surprisingly, a difference of elution time between the "low" and the "high" surface tension is not significant. The graph shows that the difference between the elution time for high surface tension and the elution time for low surface tension can be neglected in the range of viscosity studied (2- 14 cP), since the difference rarely exceeds 5%, which remains within the domain of accuracy required. Yet with more viscous inks, the difference might not be neglected any more and the surface tension could be taken into account. It can also be noticed that the difference is smaller with an aspiration volume of 0.5 mL.

So the elution time is almost not dependant upon the surface tension. With an aspiration volume of 0.5 mL and a total height of water of 116 cm, the mean value of the two equations (for low and high surface tension) reads (VISCO = viscosity value): elution time = 0.156*VISCO + 2.25 which means that the final algorithm for the viscosity (represented by "VISCO") for this example, (and which can differ somewhat for different apparatus and conditions) is :

$$VISCO = (\text{elution time} - 2.25) / 0.156$$

where sample size or aspiration volume AV=0.5 mL, and water height to produce hydrostatic pressure WH=116 cm

- At a given viscosity, the elution time is proportional to the total height of water in the system : if this latter is not constant, it is possible to correct the values in accordance with any change when this is recorded. However it is preferred to use a dynamic system to keep the water height under control, e.g. between two level settings.
- The accuracy is improved when the total height of water in the system is higher and the aspiration volume bigger, since the elution time is longer.
- The evolution of the droplet frequency over time depends on both viscosity and surface tension.

The relationship between surface tension and drop size was also examined, as shown in fig 8. In particular, the influence of surface tension when the ink is pumped at an imposed speed (valve closed, method B) was examined.

For a low viscosity (around 2.6 cP or lower), the calibration curve is nearly a straight line : there is a linear relation between surface tension and the droplet size. However for a higher viscosity (around 12.5 cP or higher), the correlation coefficient is not so good. The size of the droplets is smaller when the viscosity increases: the droplet size depends on both surface tension and viscosity. Consequently it is possible to determine the surface tension from the droplet size sufficiently accurately only if the viscosity of the ink is known.

The data are entered in a statistical program such as "Statistica" and a linear model is made (with only two levels of viscosity) : the result is "drop size = 92.4279 - 0.9594*VISCO + 1.2495*ST". Thus with a dispensing speed of 0.01 mL/min, the final algorithm is (for this example):

$$ST = (\text{drop size} - 92.4279 + 0.9594*VISCO) / 1.2495$$

If the viscosity is replaced by its expression in function of elution time "VISCO = (elution time - 2.25) / 0.156", the final algorithm becomes :

$$\text{Surface tension } ST = [\text{drop size} - 92.4279 + 6.15*(\text{elution time} - 2.25)] / 1.2495$$

At a high pumping speed, surface tension can have an effect on the elution behaviour, but this method is less preferred. At a low pumping speed, surface tension can be deduced from the size of the droplets, but this latter depends also on the viscosity of the ink. If the pumping is very low (0.01 mL/min), the calibration curve is linear. However, surface tension has no significant influence on the droplet shape.

As has been described, the liquid handling device such as the XL222 apparatus can be used for viscosity and surface tension screening of water-based inks. These two properties can be obtained in two consecutive measurements, done on the same sample : the ink is aspirated in the needle or pipette, then a certain amount is dispensed at a low imposed speed, and the size of the second droplet is determined. Then the ink remaining is dispensed under hydrostatic pressure, so the viscosity can be deduced from the elution time.

Knowing the viscosity of the ink, it is then possible to determine its surface tension thanks to the calibration curves linking this property to the droplet size. It is necessary to measure viscosity and surface tension at the same time, since surface tension can only be determined if the viscosity is known. In addition, it represents a gain of time and product.

If a higher accuracy is wanted then it is also possible to start with the determination of the viscosity from the elution time recording (assuming the influence of surface tension can be neglected), followed by the evaluation of the surface tension (calculated from the droplet characteristics and the determined viscosity), then the viscosity can be re-calculated taking into account that there is a small influence of surface tension and the latter is know from the first-phase analysis, and eventually also the surface tension can be re-calculated based upon the droplet characteristics and the corrected viscosity value.

Controllers for use with the present invention may be constructed in conventional ways, e.g. as a microcontroller, e.g. a computing device with a memory and a processor such as a microprocessor or a Programmable Gate array such as an FPGA. Software may be provided to execute any of the methods of the present invention and may be installed within the controller. This software contains code such that when executed on a processing engine such as a computing device with memory and a processor the steps of any of the methods of the present invention are carried out. The software may be stored on any suitable machine readable storage medium such as an optical disk, e.g. a CD-ROM or DVD-ROM, a magnetic disk such as a diskette or a harddrive, a solid state memory device such as a USB memory stick, etc.

**Claims**

1. A method for measuring viscosity and surface tension of a liquid, the method comprising:

   forming droplets at a needle or pipette containing a sample of the test liquid, measuring a size-related characteristic of the droplets of the test liquid, and
   subsequently or previously, draining a volume of the same sample of the test liquid from the needle or pipette under pump pressure or a hydrostatic pressure, and measuring an elution time.

2. The method of claim 1 further comprising determining the viscosity from the elution time, and determining the surface tension from the viscosity and the size-related characteristic of the droplet.

3. The method or claims 1 or 2, wherein the size-related characteristic of the droplets is droplet size, volume, diameter, or weight.

4. The method of any previous claim, wherein the same needle or pipette is used for both measurements.

5. The method of any previous claim wherein forming of the droplets includes draining of the droplets at a predetermined rate.

6. The method of any previous claim wherein the volume of test liquid eluted is a predetermined volume and/or an in situ measured volume.

7. The method of any previous claim wherein the pump pressure or hydrostatic pressure remains sensibly constant during the elution.

8. The method according to any previous claim wherein the hydrostatic pressure is exerted on the test liquid by a driving fluid.

9. The method of claim 8, wherein the driving fluid is a driving liquid or driving gas.

10. The method of claim 8 or 9, wherein the driving fluid has a lower viscosity than the viscosity of the test liquid.

11. The method of any of the claims 8 to 10 wherein the driving liquid is separated from the test liquid via a gas or air gap.

12. The method of claim 11 wherein the column height of the driving liquid is dynamically kept constant.

13. A method of measuring viscosity of a liquid, the method comprising:

   draining a volume of a sample of the test liquid from a needle or pipette under pump pressure or a hydrostatic pressure, and measuring an elution time, the hydrostatic pressure being exerted on the test liquid by a driving fluid.

14. The method of claim 13 wherein the volume of test liquid eluted is a predetermined volume and/or an in situ measured volume.

15. The method of claim 13 or 14, wherein the pump pressure or hydrostatic pressure remains sensibly constant during the elution.

16. The method of any of claims 13 to 15, wherein the driving fluid is a driving liquid or driving gas.

17. The method of any of claims 13 to 16, wherein the driving fluid has a lower viscosity than the viscosity of the test liquid.

18. The method of claim 16 or 17 wherein the driving liquid is separated from the test liquid via a gas or air gap.

**19.** The method of any of claims 13 to 18, wherein a column height of the driving liquid is dynamically kept constant.

**20.** A method of measuring viscosity and surface tension of a plurality of test liquids having different viscosities and/or surface tensions, the method comprising:

forming first droplets at a needle or pipette containing a sample of a first test liquid and
measuring a first size-related characteristic of the first droplets, and
subsequently or previously, draining a volume of the same sample of the first test liquid from the needle or pipette under a pump pressure or hydrostatic pressure, and measuring a first elution time, and
forming second droplets at the same needle or pipette containing a sample of a second test liquid, at a rate and
measuring a second size-related characteristic of the second droplets, and
subsequently or previously, draining a volume of the same sample of the second test liquid from the needle or pipette under a hydrostatic pressure, and measuring a second elution time.

**21.** An apparatus for measuring viscosity and surface tension of a fluid, comprising:

means for forming droplets at a needle or pipette containing a sample of a test liquid and measuring a size-related characteristic of the droplets such as droplet size, volume, diameter, or weight of the test liquid,
means for, subsequently or previously, draining a volume of the same sample of the test liquid from the needle or pipette under a hydrostatic pressure using a driving fluid, and means for measuring an elution time.

**22.** The apparatus according to claim 21, wherein the driving fluid is a driving liquid or driving gas.

**23.** The apparatus according to claims 21 or 22, including means for determining the viscosity from the elution time, and means for determining the surface tension from the viscosity and the size-related characteristic of the droplet such as droplet size, volume, diameter, or weight of the test liquid.

**24.** An apparatus for measuring viscosity of a fluid, comprising:

means for draining a volume of the same sample of the test liquid from the needle or pipette under a hydrostatic pressure using a driving fluid, and
means for measuring an elution time.

**25.** The apparatus according to claim 24, wherein the driving fluid is a driving liquid or driving gas.

**26.** The apparatus according to claims 24 or 25, including means for determining the viscosity from the elution time.

**27.** A controller for controlling an apparatus for measuring viscosity and surface tension of a fluid, the apparatus having a needle or pipette, the controller comprising:

means for controlling formation of droplets at the needle or pipette containing a sample of a test liquid,
means for controlling measurement of a size-related characteristic of the droplets such as droplet size, volume, diameter, or weight of the test liquid, and
means for controlling draining of a volume of the same sample of the test liquid from the needle or pipette under a hydrostatic pressure using a driving fluid, and means for controlling measurement of an elution time.

**28.** A computer program product having code for controlling an apparatus for measuring viscosity and surface tension, the apparatus having a needle or pipette, the code providing when executed on a computing device having a memory and a processor:

means for controlling formation of droplets at the needle or pipette containing a sample of a test liquid,
means for controlling measurement of a size-related characteristic of the droplets such as droplet size, volume, diameter, or weight of the test liquid, and
means for controlling draining of a volume of the same sample of the test liquid from the needle or pipette under a hydrostatic pressure using a driving fluid, and
means for controlling measurement of an elution time.

**29.** A machine readable storage medium storing the computer program product of claim 28.

FIG 1

FIG 2

| 20 DRIVE DROPLETS FROM A NEEDLE CONTAINING A SAMPLE OF THE FLUID, AT A PREDETERMINED RATE AND MEASURE DROPLET SIZE, |

| 22 DRAIN A PREDETERMINED VOLUME OF THE SAME SAMPLE OF THE FLUID FROM THE NEEDLE UNDER HYDROSTATIC PRESSURE, AND MEASURE AN ELUTION |

| 24. DETERMINE THE VISCOSITY FROM THE ELUTION TIME, |

| 26 DETERMINE THE SURFACE TENSION FROM THE VISCOSITY AND THE DROPLET SIZE. |

FIG 3

30 aspirating via a driving liquid a volume V1 of said liquid material inside a needle with an internal volume VN and tip diameter TN,

↓

32- aspirating an air gap of volume V2,

↓

34 equilibrating the system for a time period of at least T1,

↓

36 dispensing a volume V3 of said material at a dispensing speed of S1,

↓

38 - determining the droplet volume Vd of the droplets formed during said dispensing,

↓

40 - switching the needle input from the driving liquid to an open drain condition,

↓

42 - determining the elution time TE2 until all liquid has eluded from the needle and the air gap is detected,

↓

44 - calculating the viscosity of the liquid material from the second elution time TE2,

↓

46 - calculating the surface tension of the liquid material from the VD and TE2 measures.

Valvemate

Tube 3000µL

402
Syringe
Pump

Tube 3000µL

airgap

Needle

Photocell

FIG 4

FIG 5

Valvemate

Container

Tube
3000µL

402
Syringe
pump

Tube
3000µL

Airgap

Needle

Photocell

FIG 6

FIG 7

FIG 8

FIG 9

FIG 10

| European Patent Office | EUROPEAN SEARCH REPORT | Application Number EP 07 00 1575 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 4 910 402 A (MCMILLAN NORMAN [IE])<br>20 March 1990 (1990-03-20)<br><br>* column 1, line 5 - column 1, line 23 *<br>* column 2, line 9 - column 2, line 16 *<br>* column 2, line 50 - column 2, line 66 *<br>* column 4, line 10 - column 4, line 26 *<br>* column 4, line 41 - column 4, line 49 *<br>* column 5, line 67 - column 6, line 8 *<br>* column 6, line 48 - column 6, line 58 *<br>* figure 1 *<br>----- | 1-19,<br>21-27<br>20,27-29 | INV.<br>G01N11/06<br>G01N13/02 |
| X<br><br>A<br>Y | WO 2004/070360 A (JENSER TECHNOLOGY AB [SE]; ELVESJOE JOHN [SE]; SKOGOE MAARTEN [SE]; SV) 19 August 2004 (2004-08-19)<br><br>* page 1, line 6 - page 1, line 7 *<br>* page 3, line 25 - page 4, line 25 *<br>* page 6, line 3 - page 7, line 16 *<br>* page 7, line 29 - page 8, line 8 *<br>* page 8, line 15 - page 9, line 14 *<br>* figures 1-5 *<br>----- | 21-27<br><br>12,19<br>20 | |
| Y | WO 03/021232 A (SYMYX TECHNOLOGIES INC [US]) 13 March 2003 (2003-03-13)<br>* page 1, line 5 - page 1, line 10 *<br>* page 5, line 14 - page 5, line 20 *<br>* page 17, line 20 - page 18, line 14 *<br>* page 22, line 10 - page 25, line 3 *<br>* figure 3 *<br>-----<br>-/-- | 27-29 | TECHNICAL FIELDS SEARCHED (IPC)<br><br>G01N<br>B01L |

The present search report has been drawn up for all claims

| Place of search | Date of completion of the search | Examiner |
|---|---|---|
| The Hague | 11 July 2007 | Koch, Anette |

EPO FORM 1503 03.82 (P04C01)

**European Patent Office**

## EUROPEAN SEARCH REPORT

Application Number

EP 07 00 1575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2003/205079 A1 (TAYLOR JOHN A [US]) 6 November 2003 (2003-11-06)<br><br>* paragraph [0017] - paragraph [0018] *<br>* paragraph [0020] - paragraph [0021] *<br>* paragraph [0031] *<br>* paragraph [0035] - paragraph [0039] *<br>* paragraph [0045] - paragraph [0053] *<br>* paragraph [0059] - paragraph [0060] *<br>* figures 1,2 *<br>----- | 21-29<br><br>1-5,8-11 | |

TECHNICAL FIELDS
SEARCHED      (IPC)

The present search report has been drawn up for all claims

| Place of search | Date of completion of the search | Examiner |
|---|---|---|
| The Hague | 11 July 2007 | Koch, Anette |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 1575

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2007

| Patent document cited in search report | | Publication date | Patent family member(s) | | Publication date |
|---|---|---|---|---|---|
| US 4910402 | A | 20-03-1990 | AU | 625333 B2 | 09-07-1992 |
| | | | AU | 1885288 A | 11-01-1990 |
| | | | DE | 3872427 D1 | 06-08-1992 |
| | | | DE | 3872427 T2 | 11-02-1993 |
| | | | EP | 0286419 A2 | 12-10-1988 |
| | | | JP | 1038633 A | 08-02-1989 |
| | | | ZA | 8802454 A | 29-09-1988 |
| WO 2004070360 | A | 19-08-2004 | EP | 1595134 A1 | 16-11-2005 |
| WO 03021232 | A | 13-03-2003 | US | 2003097871 A1 | 29-05-2003 |
| US 2003205079 | A1 | 06-11-2003 | US | 2004149018 A1 | 05-08-2004 |

EPO FORM P0459

For more details about this annex : see Official Journal of the European Patent Office, No. 12/82

**EP 1 950 550 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 685730 A
- US 6681618 B
- US 6668622 B
- US 6655194 B
- US 6644101 B
- US 6484567 B
- US 6957565 B
- US 6904786 B
- US 6401519 B
- US 6393895 B
- US 6336353 B
- US 6182499 B
- US 6941797 B
- US 6769292 B
- US 6732574 B
- US 6393898 B